# EUROPEAN PATENT APPLICATION

(11) **EP 4 671 117 A1**
(43) Date of publication of application: **31.12.2025**
(21) Application number: 23878389.8
(22) Date of filing: 27.12.2023
(51) Int. Cl.: B63J 2/02

(54) **AIR CIRCULATION SYSTEM THROUGH DOUBLE-WALLED PIPE**

(30) Priority: 23.02.2023 KR 20230024038
(71) Applicant: Hanwha Ocean Co., Ltd., Geoje-si, Gyeongsangnam-do 53302 (KR)
(72) Inventor: KIM, Jong Hyun, Gyeongsangnam-do 53300 (KR)
(74) Representative: Cabinet Beau de Loménie
(86) International application number: PCT/KR2023/021744
(87) International publication number: WO 2024/177268

(57) **Abstract**

A double-walled pipe ventilation system is disclosed. The double-walled pipe ventilation system includes: an engine unit including a jacket cooling circulation unit dissipating heat generated by an engine; a fuel supply unit connected to the engine unit via a double-walled pipe and supplying fuel through an inner pipe of the double-walled pipe; an air outlet line along which air is discharged from an outer pipe of the double-walled pipe; an air circulation unit circulating the air discharged along the air outlet line; and a water ejector provided to the air circulation unit and suctioning air circulated through the outer pipe using a high-pressure working fluid introduced into the water ejector.

## Description

### [Technical Field]

The present invention relates to a double-walled pipe ventilation system. More particularly, the present invention relates to a double-walled pipe ventilation system that circulates air through a double-walled pipe for supplying fuel gas, such as LNG, that can be hazardous when leaked from a ship.

### [Background Art]

In ships and offshore structures, such as an LNG carrier equipped with a natural gas injection engine, such as ME-GI, ME-GA, X-DF engines, a double-walled pipe is used to prevent gas in a gas pipe from leaking and affecting a safety zone.

That is, since LNG used as fuel for an engine is required not to leak into the safety zone, such as an engine room in which an engine is installed, in the event of gas leakage from an inner pipe of the double-walled pipe, an outer pipe of the double-walled pipe serves to prevent gas from leaking into the safe zone.

Here, the outer pipe is always ventilated during gas mode operation of an engine to detect gas leakage. Typically, the outer pipe is required to be ventilated with dry air 30 times per hour against potential gas leakage, and air circulated through the outer pipe is required to be discharged to the outside of a ship or to an area where there is no risk of fire. Accordingly, conventional ships and offshore structures are equipped with fans to take in air from an outside environment.

However, fans for air circulation are very expensive and consume a lot of power. In addition, such a fan is electrical equipment and thus requires an expensive explosion-proof enclosure.

### [Disclosure]

### [Technical Problem]

Embodiments of the present invention have been conceived to solve such problems in the art and provide a double-walled pipe ventilation system.

More specifically, it is an aspect of the present invention to provide a double-walled pipe ventilation system having a simple and efficient structure to be used in a ship or offshore structure instead of fans.

The present invention is not limited thereto and other aspects of the present invention will become apparent to those skilled in the art from the following description in conjunction with the accompanying drawings.

### [Technical Solution]

In accordance with one aspect of the present invention, a double-walled pipe ventilation system includes: an engine unit including a jacket cooling circulation unit dissipating heat generated by an engine; a fuel supply unit connected to the engine unit via a double-walled pipe and supplying fuel through an inner pipe of the double-walled pipe; an air outlet line along which air is discharged from an outer pipe of the double-walled pipe; an air circulation unit circulating the air discharged along the air outlet line; and a water ejector provided to the air circulation unit and suctioning air circulated through the outer pipe using a high-pressure working fluid introduced into the water ejector.

The jacket cooling circulation unit may include: an air jacket cooler cooling scavenging air in the engine and dissipating heat generated by the engine; a jacket cooling circulation pump circulating cooling water for heat exchange in the jacket cooling circulation unit; a jacket cooler cooling the cooling water to cool the air jacket cooler; and a deaerator discharging air or gas generated in the jacket cooling circulation unit.

The air circulation unit may include an expansion tank connected to the jacket cooling circulation unit, receiving cooling water from the jacket cooling circulation unit, and storing the received cooling water, wherein the expansion tank may be connected to the water ejector via a working fluid supply line, and the working fluid may be the cooling water stored in the expansion tank.

The double-walled pipe ventilation system may further include: an ejector pump and a working fluid control valve on the working fluid supply line, wherein the ejector pump may be operated to build pressure in the working fluid supply line such that the working fluid is supplied to the water ejector to circulate air supplied to the outer pipe of the double-walled pipe.

The water ejector may be connected to the expansion tank via a recirculation line such that the working fluid and air having passed through the water ejector is circulated back to the expansion tank.

The double-walled pipe ventilation system may further include: a guide pipe through which the working fluid in the expansion tank is circulated, wherein the guide pipe may be connected to a discharge line provided with a gas detector, and fuel supplied to the engine may be changed from fuel gas to fuel oil when gas leakage is detected by the gas detector.

In accordance with another aspect of the present invention, a double-walled pipe ventilation method includes: a fuel supply step in which fuel is supplied from a fuel supply unit to an engine unit through an inner pipe of a double-walled pipe; and an air circulation step in which air discharged through the air outlet line is circulated, wherein the air circulation step includes suctioning air circulated through the outer pipe of the double-walled pipe by introducing a high-pressure working fluid into a water ejector provided to the air circulation unit.

The fuel supply step may include a jacket cooling circulation step in which scavenging air in an engine is cooled and heat generated by the engine is dissipated, wherein the jacket cooling circulation step may include circulating cooling water through a jacket cooling circulation unit and supplying the circulated cooling water to the air circulation unit.

The air circulation step may further include a cooling water storage step in which cooling water is supplied from the jacket cooling circulation unit to an expansion tank to be stored in the expansion tank; and a working fluid supply step in which the working fluid is supplied from the expansion tank to the water ejector, wherein the working fluid may be the cooling water stored in the expansion tank.

The working fluid supply step may include operating an ejector pump to build pressure in a working fluid supply line and supplying the working fluid from the expansion tank to the water ejector to circulate air supplied to the outer pipe of the double-walled pipe.

The working fluid supply step may further include a recirculation step in which the working fluid and air having passed through the water ejector is circulated back to the expansion tank.

The double-walled pipe ventilation method may further include: a gas leakage detection step, wherein the gas leakage detection step may include: a first gas leakage detection step in which the presence of gas leakage from the inner pipe of the double-walled pipe to the outer pipe of the double-walled pipe is detected; and a second gas leakage detection step in which the presence of gas leakage in the air circulation step is detected.

When gas leakage is detected in the first gas leakage detection step, operation of a corresponding engine may be stopped and, when gas leakage is detected in the second gas leakage detection step, supply of fuel gas may be stopped and fuel oil may be supplied.

### [Advantageous Effects]

As described above, the present invention provides a double-walled pipe ventilation system.

Specifically, the present invention provides a double-walled pipe ventilation system having a simple and efficient structure to be used in a ship or offshore structure instead of expensive fans.

In addition, with use of a water ejector in place of an expensive fan, the ventilation system according to the present invention can eliminate the need for a separate power source and is easy to maintain due to the simple structure thereof.

In addition, since a desired level of ventilation capacity can be satisfied using a multi-stage water ejector, the ventilation system according to the present invention can ensure flexibility in design choices.

In addition, the ventilation system can significantly reduce the risk of gas explosion through use of cooling water (fresh water or seawater) for air circulation and can establish one integrated gas leak detection system through association with an existing cooling system (a jacket cooling circulation unit) of a ship.

In addition, an existing expansion tank in a ship can be utilized as a tank for storing a working fluid to be supplied to the water ejector, and an existing gas leak detector of a jacket cooler in each engine can be utilized, thereby allowing simultaneous detection of gas leakage from each engine. That is, the ventilation system according to the present invention can simultaneously detect gas leakage from each engine and can achieve a higher degree of vacuum than a conventional fan-based ventilation system, thereby ensuring more accurate and reliable ventilation in the event of gas leakage.

Furthermore, in the event of gas leakage from the inner pipe of the double-walled pipe, safe discharge of leaked gas can be ensured through safe monitoring and control, thereby allowing construction of a safe system.

The present invention is not limited thereto and other advantages of the present invention will become apparent to those skilled in the art from the following description in conjunction with the accompanying drawings.

### [Description of Drawings]

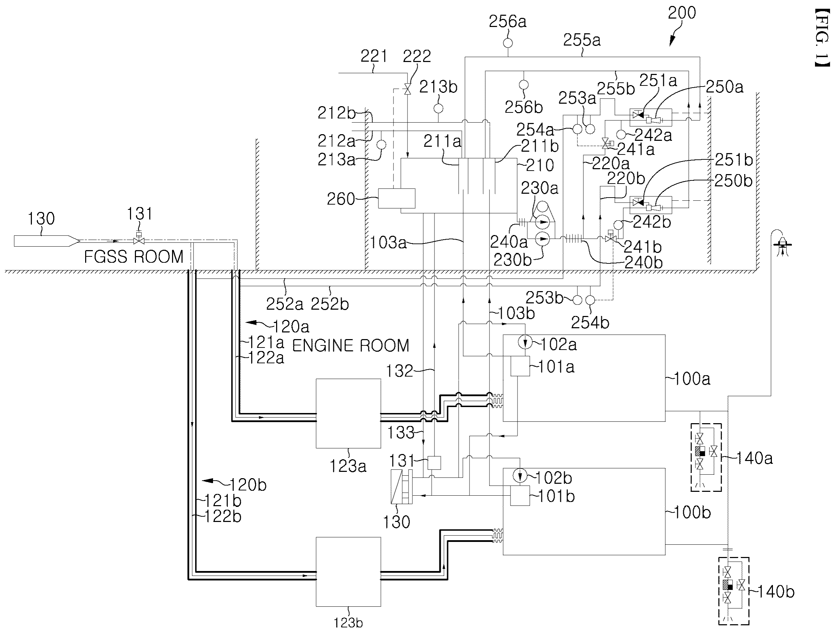

FIG. 1 is a block diagram of a double-walled pipe ventilation system according to one embodiment of the present invention.

### [Best Mode]

The above and other aspects, features, and advantages of the present invention will become apparent from the detailed description of the following embodiments in conjunction with the accompanying drawings.

The terminology used herein is for the purpose of describing particular embodiments and is not intended to be limiting. As used herein, the terms "comprises," "comprising," "includes," and/or "including," when used in this specification, specify the presence of stated features, integers, steps, operations, elements, components, and/or groups thereof, but do not preclude the presence or addition of one or more other features, integers, steps, operations, elements, components, and/or groups thereof. Further, it will be understood that, when an element is referred to as being "on" or "connected to" another element, it may be directly on or connected to the other element or layer or intervening elements may be present.

Hereinafter, exemplary embodiments of the present invention will be described in detail with reference to the accompanying drawings. It should be understood that the embodiments are provided for complete disclosure and thorough understanding of the present invention by those skilled in the art and that the present invention is not limited to the following embodiments and may be embodied in different ways by those skilled in the art.

FIG. 1 is a block diagram of a double-walled pipe ventilation system according to one embodiment of the present invention.

Referring to FIG. 1, the double-walled pipe ventilation system according to the present invention may include an engine unit, a fuel supply unit, an air outlet line, and an air circulation unit.

The engine unit includes a dual fuel engine. Specifically, the engine unit may include an engine fueled by natural gas, among engines used in a ship. For example, the engine may include one or more of the following: a MAN Electronic Gas-Injection (ME-GI) engine, an eXtra long stroke Dual Fuel (X-DF) engine, a DF engine (Dual Fuel Diesel Electric (DFDE)), and a Dual Fuel Diesel Generator (DFDG)).

The engine unit is disposed in an engine room (E/R) and may include one or more engines, for example, a first engine 100a and a second engine 100b. The number of engines may be adjustable as needed.

The fuel supply unit 110 supplies fuel gas to the engine unit and may include a fuel storage tank (not shown) that stores fuel gas.

The fuel supply unit 110 supplies fuel gas to the first engine 100a and the second engine 100b via main fuel supply lines 120a, 120b, respectively, wherein each of the main fuel supply lines 120a, 120b may be provided with a master gas valve 111 to regulate supply of the fuel gas.

Specifically, the main fuel supply line 120a; 120b may be composed of a double-walled pipe consisting of an inner pipe 122a; 122b and an outer pipe 121a; 121b to ensure safe delivery of gas or the like, which can be hazardous when leaked. Here, the inner pipe 122a; 122b of the double-walled pipe may serve as a passage for supply of fuel, and the outer pipe 121a; 121b of the double-walled pipe may serve as a passage for air circulation to detect gas leakage while protecting the inner pipe 122a; 122b.

Air circulated through the outer pipe 121a; 121b is supplied to the air circulation unit along an air outlet line 252a; 252b, wherein the air outlet line 252a; 252b is provided with a first gas detector 253a; 253b and a flow detector 254a; 254b.

Specifically, the first gas detector 253a, 253b primarily detects gas leakage from the inner pipe 122a; 122b. When gas leakage is detected by the first gas detector 253a, 253b, operation of a corresponding engine is switched from gas mode to oil mode.

The flow detector 254a; 254b detects whether air is continuously circulated through the outer pipe 121a; 121b of the double-walled pipe. When it is determined that air is continuously circulated through the outer pipe 121a; 121b, fuel gas is supplied from the fuel supply unit to the engine unit. Here, the flow detector 254a, 254b may have a capacity sufficient to allow a space (volume) between the outer pipe 121a; 121b and the inner pipe 122a; 122b to be ventilated at a rate of 30 air changes per hour.

The air outlet line 252a; 252b may be further provided with a pressure sensor (not shown) to measure a pressure in the air outlet line 252a; 252b.

Specifically, a normal pressure in the air outlet line 252a; 252b ranges from -0.5 bar to 0 bar. When a pressure value measured by the pressure sensor (not shown) is less than -0.5 bar, it may be determined that normal operation is not possible due to clogging upstream of a water ejector 250a; 250b. When a pressure value measured by the pressure sensor (not shown) exceeds 0 bar, it may be determined that normal operation is not possible due to clogging downstream of the water ejector 250a; 250b or due to poor suction conditions.

When it is determined that normal operation is not possible, operation of a corresponding engine may be switched from gas mode to oil mode. In addition, operation of the engine may be switched from oil mode to gas mode after addressing a problem with air circulation in the air outlet line 252a, 252b and confirming that the pressure in the air outlet line 252a; 252b returns to a normal range.

The engine unit may further include: a jacket cooling circulation unit dissipating heat generated by the engine 100a; 100b; and a condensate storage unit 140a; 140b allowing a condensate or water introduced into the engine to be automatically drained thereinto.

Specifically, the jacket cooling circulation unit includes: an air jacket cooler 101a; 101b cooling scavenging air in the engine and dissipating heat generated by the engine; a jacket cooling circulation pump 102a; 102b circulating cooling water for heat exchange in the jacket cooling circulation unit; a jacket cooler 130 cooling the cooling water to cool the air jacket cooler; and a deaerator 131 discharging air or gas generated in the jacket cooling circulation unit.

The deaerator 131 may be connected to a cooling water re-supply pipe through which cooling water heated while circulating through the air jacket cooler 101a; 101b is supplied back to the jacket cooler 130, wherein the air and gas separated by the deaerator 131 may be supplied to the air circulation unit through an air outlet pipe 132.

The air circulation unit may be connected to the jacket cooling circulation unit, such that cooling water heated while circulating through the air jacket cooler 101a; 101b may be supplied to the air circulation unit.

Specifically, the air circulation unit includes an expansion tank 210 and a water ejector 250a; 250b, wherein the expansion tank 210 is connected to the jacket cooling circulation unit via a cooling water supply line 103a; 103b and is connected to the water ejector 250a; 250b via a working fluid supply line 220a; 220b.

A working fluid is supplied to the water ejector 250a; 250b along the working fluid supply line 220a; 220b. Here, the working fluid may be cooling water stored in the expansion tank.

That is, the expansion tank 210 serves to expel air bubbles from cooling water, which cools the engine while circulating through the jacket cooling circulation unit, and to allow expansion/contraction of water depending on temperature, in which the cooling water stored in the expansion tank 210 is supplied as the working fluid to the water ejector 250a; 250b.

In addition, the expansion tank 210 serves to build pressure throughout the jacket cooling circulation unit and acts as an expansion compensation device. Further, since the expansion tank 210 is disposed at an uppermost side of the jacket cooling circulation unit, the expansion tank 210 also serves to vent gas in the event of gas leakage.

The expansion tank 210 may be provided with a water level measurement system 260 to measure the level of the working fluid in the expansion tank. Specifically, in case of evaporation of the working fluid in the expansion tank 210 due to heat, supplementary water may be automatically injected into the expansion tank 210 based on the measured level of the working fluid in the expansion tank 210.

Accordingly, the ventilation system may further include: a supplementary water supply line 221 along which supplementary water is automatically injected into the expansion tank 210; and a supplementary water supply valve 222 disposed on the supplementary water supply line 221 to control supply of the working fluid.

The water ejector 250a; 250b is a device that creates a vacuum by suctioning air through conversion of a high-pressure working fluid into a low-pressure and high-velocity fluid, and may be configured to suction air circulated through the outer pipe 121a; 121b of the double-walled pipe using the high-pressure working fluid introduced thereinto. Here, since the high-pressure working fluid has a higher density than air, the water ejector can suction a larger volume of air.

Specifically, the ventilation system may further include an ejector pump 230a; 230b, a working fluid control valve 241a; 241b, and a discharge pressure sensor 242a; 242b on the working fluid supply line 220a; 220b, wherein the ejector pump 230a, 230b is operated to build pressure in the working fluid supply line such that the working fluid is supplied to the water ejector 250a; 250b to circulate air supplied to the outer pipe 121a; 121b of the double-walled pipe through the air outlet line 252a; 252b.

The discharge pressure sensor 242a; 242b is a device that measures a pressure upstream of the water ejector 250a; 250b. If the pressure upstream of the water ejector 250a; 250b is not maintained at a predetermined level or higher, the water ejector 250a, 250b will not be able to function properly. Accordingly, when a pressure value measured by the discharge pressure sensor 242a; 242b is low, the working fluid control valve 241a; 241b may be controlled to maintain the pressure upstream of the water ejector 250a; 250b at the predetermined level or higher

In addition, since the working fluid supplied through the working fluid supply line 220a; 220b is hot cooling water, a heat dissipation tube 240a may be disposed upstream of the ejector pump 230a; 230b to protect the ejector pump 230a; 230b, and a fin-type heat dissipation tube may be disposed downstream of the ejector pump 230a; 230b to prevent problems such as sticking due to heat generation due to continuous use of the ejector pump 230a, 230b.

The ejector pump 230a, 230b is composed of one working pump and one standby pump, such that the standby pump is operated when a pressure differential between upstream and downstream of the ejector pump drops to a predetermined level or less, indicating that the working pump fails to function properly.

In addition, a non-return loop 251a; 251b may be disposed downstream of the air outlet line 252a; 252b connected to the water ejector 250a; 250b to prevent a small amount of the working fluid from flowing back into the double-walled pipe 120a; 120b when the water ejector 250a, 250b is initially supplied with the working fluid and performs air suction.

In addition, the water ejector 250a; 250b may be externally grounded to prevent gas explosion due to static electricity.

Further, the water ejector 250a; 250b may be connected to the expansion tank 210 via a recirculation line 255a; 255b, such that the working fluid and air having passed through the water ejector 250a; 250b is circulated back to the expansion tank 210.

The recirculation line 255a; 255b may be provided with an output pressure sensor 256a; 256b to measure a pressure downstream of the water ejector 250a; 250b to observe whether the water ejector 250a; 250b functions properly. When a pressure value measured by the output pressure sensor 256a; 256b is outside a predetermined range, the working fluid control valve 241a; 241b may be controlled to control the flow rate and pressure of the working fluid.

The ventilation system may further include a guide pipe 211a; 211b in the expansion tank 210, such that the working fluid recirculated along the recirculation line 255a; 255b is introduced into the expansion tank 210 through the guide pipe and gas and air contained in cooling water from each engine 100a; 100b is prevented from flowing into the other engine.

The guide pipe 211a, 211b may be connected to a discharge line 212a; 212b, wherein the discharge line 212a; 212b may be provided with a second gas detector 213a; 213b. When gas leakage is detected by the second gas detector 213a; 213b, supply of fuel gas is stopped and fuel oil is supplied.

Here, since gas introduced into the expansion tank is lighter than water or air, the gas may be separated within the guide pipe 211a; 211b and then vented to outside atmosphere through the discharge line 212a, 212b.

The double-walled pipe ventilation system according to the present invention may further include a controller (not shown). The controller controls operation of the double-walled pipe ventilation system. Specifically, the controller may control the flow of fuel gas and the mode of operation of the engine based on temperature and pressure information measured by the detectors and the sensors in the system.

In the following, with reference to the above-described double-walled pipe ventilation system according to the present invention, a method of operating the double-walled pipe ventilation system according to one embodiment of the present invention will be described.

The method of operating the double-walled pipe ventilation system includes: a fuel supply step in which fuel is supplied from the fuel supply unit to the engine unit through the inner pipe 122a; 122b of the double-walled pipe; and an air circulation step in which air discharged through the outer pipe 121a; 121b of the double-walled pipe is circulated.

The fuel supply step includes supplying LNG fuel as fuel gas to the engine unit, wherein LNG fuel is supplied to a fuel heating unit along the main fuel supply line 400. The fuel supply unit supplies the fuel gas to the first engine 100a and the second engine 100b via the main fuel supply lines 120a, 120b, respectively.

Specifically, the main fuel supply line 120a; 120b is composed of a double-walled pipe consisting of an inner pipe 122a; 122b and an outer pipe 121a; 121b to ensure safe delivery of gas or the like which can be hazardous when leaked. Here, the inner pipe 122a; 122b of the double-walled pipe may serve as a passage for supply of fuel, and the outer pipe 121a; 121b of the double-walled pipe may serve as a passage for air circulation to detect gas leakage while protecting the inner pipe 122a; 122b.

The fuel supply step may further include a jacket cooling circulation step in which scavenging air in the engine 100a; 100b is cooled and heat generated by the engine 100a; 100b is dissipated. The jacket cooling circulation step may include circulating cooling water through the jacket cooling circulation unit and supplying the circulated cooling water to the air circulation unit.

For example, the jacket cooling circulation step includes supplying fresh water or seawater as cooling water to cool the engine, wherein the jacket cooling circulation pump 102a; 102b is operated to supply the cooling water from the jacket cooler 130 to the air jacket cooler 101a; 101b. Then, the engine is cooled by the cooling water supplied to the air jacket cooler 101a; 101b, and the cooling water heated by heat from the engine is circulated to the jacket cooler 130 to be cooled by the jacket cooler 130 and then supplied back to the air jacket cooler 101a; 101b.

Here, when air and gas are contained in the heated cooling water, the heated cooling water may be supplied to the deaerator 131 to separate the air and gas from the cooling water and the separated air and gas may be supplied to the air circulation unit through the air outlet pipe 132.

The air circulation unit is connected to the jacket cooling circulation unit, such that cooling water heated while circulating through the air jacket cooler 101a; 101b is supplied to the air circulation unit to be used in the air circulation step.

The air circulation step includes: a cooling water storage step in which cooling water is supplied from the jacket cooling circulation unit to the expansion tank 210 to be stored in the expansion tank 210; and a working fluid supply step in which a working fluid is supplied from the expansion tank 210 to the water ejector 250a; 250b.

Here, the working fluid is supplied to the water ejector 250a; 250b along the working fluid supply line 220a; 220b. The working fluid may be cooling water stored in the expansion tank.

Specifically, in the cooling water storage step, cooling water heated by cooling the engine while circulating through the jacket cooling circulation unit is stored in the expansion tank 210. The cooling water stored in the expansion tank 210 is supplied as the working fluid to the water ejector 250a; 250b. Here, the expansion tank 210 builds pressure throughout the jacket cooling circulation unit, acts as an expansion compensation device, and vents gas in the event of gas leakage.

The working fluid supply step includes operating the ejector pump 230a; 230b to build pressure in the working fluid supply line and supplying the working fluid to the water ejector 250a; 250b to circulate air supplied to the outer pipe 121a; 121b of the double-walled pipe through the air outlet line 252a; 252b. Here, a pressure upstream of the water ejector 250a; 250b is measured using the discharge pressure sensor 242a; 242b. When a pressured value measured by the discharge pressure sensor is low, the working fluid control valve 241a; 241b is controlled to maintain the pressure upstream of the water ejector at a predetermined level or higher.

The working fluid supply step further includes a recirculation step in which the working fluid and air having passed through the water ejector 250a; 250b is circulated back to the expansion tank 210.

Here, a pressure downstream of the water ejector 250a; 250b is measured using the output pressure sensor 256a; 256b disposed on the recirculation line 255a; 255b. When a pressure value measured by the output pressure sensor is outside a predetermined range, the working fluid control valve 241a; 241b is controlled to control the flow rate and pressure of the working fluid.

In addition, the ventilation system further includes a guide pipe 211a; 211b in the expansion tank 210, such that the working fluid recirculated along the recirculation line 255a; 255b is introduced into the expansion tank 210 through the guide pipe 211a; 211b and air and gas contained in cooling water from each engine 100a or 100b is prevented from flowing into the other engine.

The working fluid supply step may further include a water level measurement step in which the level of the working fluid in the expansion tank 210 is measured.

The fluid level measurement step may be performed in real time such that supplementary water is automatically injected into the expansion tank 210 based on the measured level of the working fluid in the expansion tank 210 in case of evaporation of the working fluid in the expansion tank 210 due to heat.

The method of operating the double-walled pipe ventilation system may further include a gas leakage detection step. The gas leakage detection step is performed in real time during operation of the system and includes a first gas leakage detection step and a second gas leakage detection step.

In the first gas leakage detection step, the presence of gas leakage from the inner pipe 122a; 122b of the double-walled pipe into the outer pipe 121a; 121b of the double-walled pipe is detected using the first gas detector 253a; 253b. When gas leakage is detected by the first gas detector, operation of a corresponding engine is stopped.

In the second gas leakage detection step, the presence of gas leakage in the air circulation step using the second gas detector 213a; 213b. When gas leakage is detected by the second gas detector, supply of fuel gas to the engine 100a; 100b may be stopped and fuel oil may be supplied to the engine.

As described above, the present invention provides a double-walled pipe ventilation system.

Specifically, the present invention provides a double-walled pipe ventilation system having a simple and efficient structure to be used in a ship or offshore structure instead of expensive fans.

In addition, with use of a water ejector in place of an expensive fan, the ventilation system according to the present invention can eliminate the need for a separate power source and is easy to maintain due to the simple structure thereof.

Further, since a desired level of ventilation capacity can be satisfied using a multi-stage water ejector, the ventilation system according to the present invention can ensure flexibility in design choices.

In addition, the ventilation system can significantly reduce the risk of gas explosion through use of cooling water (fresh water or seawater) for air circulation and can establish one integrated gas leakage detection system through association with an existing cooling system (a jacket cooling circulation unit) of a ship.

Although some embodiments have been described herein, it should be understood that these embodiments are presented by way of example only and that various modifications, changes, alterations, and equivalent embodiments can be made by those skilled in the art without departing from the spirit and scope of the present disclosure. Therefore, it should be understood that these embodiments are provided for illustration only and are not to be construed in any way as limiting the present disclosure. The scope of the present disclosure should be defined by the appended claims and the claims and their equivalents are intended to cover such modifications and the like as would fall within the scope and spirit of the invention.

## Claims

1. A double-walled pipe ventilation system comprising:
an engine unit comprising a jacket cooling circulation unit dissipating heat generated by an engine;
a fuel supply unit connected to the engine unit via a double-walled pipe and supplying fuel through an inner pipe of the double-walled pipe;
an air outlet line along which air is discharged from an outer pipe of the double-walled pipe;
an air circulation unit circulating the air discharged along the air outlet line; and
a water ejector provided to the air circulation unit and suctioning air circulated through the outer pipe using a high-pressure working fluid introduced into the water ejector.

2. The double-walled pipe ventilation system according to claim 1, wherein the jacket cooling circulation unit comprises:
an air jacket cooler cooling scavenging air in the engine and dissipating heat generated by the engine;
a jacket cooling circulation pump circulating cooling water for heat exchange in the jacket cooling circulation unit;
a jacket cooler cooling the cooling water to cool the air jacket cooler; and
a deaerator discharging air or gas generated in the jacket cooling circulation unit.

3. The double-walled pipe ventilation system according to claim 1, wherein:
the air circulation unit comprises an expansion tank connected to the jacket cooling circulation unit, receiving cooling water from the jacket cooling circulation unit, and storing the received cooling water;
the expansion tank is connected to the water ejector via a working fluid supply line; and
the working fluid is the cooling water stored in the expansion tank.

4. The double-walled pipe ventilation system according to claim 3, further comprising:
an ejector pump and a working fluid control valve on the working fluid supply line,
wherein the ejector pump is operated to build pressure in the working fluid supply line such that the working fluid is supplied to the water ejector to circulate air supplied to the outer pipe of the double-walled pipe.

5. The double-walled pipe ventilation system according to claim 4, wherein the water ejector is connected to the expansion tank via a recirculation line such that the working fluid and air having passed through the water ejector is circulated back to the expansion tank.

6. The double-walled pipe ventilation system according to claim 3, further comprising:
a guide pipe through which the working fluid in the expansion tank is circulated,
wherein the guide pipe is connected to a discharge line, the discharge line being provided with a gas detector, and
fuel supplied to the engine is changed from fuel gas to fuel oil when gas leakage is detected by the gas detector.

7. A double-walled pipe ventilation method comprising:
a fuel supply step in which fuel is supplied from a fuel supply unit to an engine unit through an inner pipe of a double-walled pipe; and
an air circulation step in which air discharged through the air outlet line is circulated,
wherein the air circulation step comprises suctioning air circulated through the outer pipe of the double-walled pipe by introducing a high-pressure working fluid into a water ejector provided to the air circulation unit.

8. The double-walled pipe ventilation method according to claim 7, wherein the fuel supply step further comprises a jacket cooling circulation step in which scavenging air in an engine is cooled and heat generated by the engine is dissipated, the jacket cooling circulation step comprising circulating cooling water through a jacket cooling circulation unit and supplying the circulated cooling water to the air circulation unit.

9. The double-walled pipe ventilation method according to claim 7, wherein the air circulation step further comprises:
a cooling water storage step in which cooling water is supplied from the jacket cooling circulation unit to an expansion tank to be stored in the expansion tank; and
a working fluid supply step in which the working fluid is supplied from the expansion tank to the water ejector, the working fluid being the cooling water stored in the expansion tank.

10. The double-walled pipe ventilation method according to claim 9, wherein the working fluid supply step comprises operating an ejector pump to build pressure in a working fluid supply line and supplying the working fluid from the expansion tank to the water ejector to circulate air supplied to the outer pipe of the double-walled pipe.

11. The double-walled pipe ventilation method according to claim 10, wherein the working fluid supply step further comprises a recirculation step in which the working fluid and air having passed through the water ejector is circulated back to the expansion tank.

12. The double-walled pipe ventilation method according to claim 7, further comprising:
a gas leakage detection step,
the gas leakage detection step comprising:
a first gas leakage detection step in which the presence of gas leakage from the inner pipe of the double-walled pipe to the outer pipe of the double-walled pipe is detected; and
a second gas leakage detection step in which the presence of gas leakage in the air circulation step is detected.

13. The double-walled pipe ventilation method according to claim 12, wherein, when gas leakage is detected in the first gas leakage detection step, operation of a corresponding engine is stopped and, when gas leakage is detected in the second gas leakage detection step, supply of fuel gas is stopped and fuel oil is supplied.
